# DEMANDE DE BREVET EUROPEEN

(11) **EP 2 273 160 A2**
(43) Date de publication de la demande: **12.01.2011**
(21) Numéro de dépôt: 10168620.2
(22) Date de dépôt: 06.07.2010
(51) Int. Cl.: F16H 63/18, F16H 27/06, F16H 61/32

(54) **Véhicule automobile comportant un dispositif de commande de boite de vitesses a double embrayage**

(30) Priorité: 07.07.2009 FR 0954698
(71) Demandeur: Peugeot Citroën Automobiles SA, 78140 Vélizy-Villacoublay (FR)
(72) Inventeur: Roy, Franck, 91700, FLEURY MEROGIS (FR)

(57) **Abrégé**

L'invention concerne un véhicule automobile comportant un dispositif de commande (1) de boîte de vitesses (40) le comportant:
- un servomoteur (2) couplé à un mécanisme d'entraînement (10),
- un ensemble de cylindres (15,23,27,32) montés les uns par rapport aux autres en liaison pivot glissant autour d'un même axe (O2) de rotation que le mécanisme d'entraînement (10),
- des moyens de réception pour accueillir les cylindres (15,23,27,32),
- une surface externe de chaque cylindre (15,23,27,32) comportant des moyens de roulement (37) sur une piste de roulement (191,201), la piste de roulement (191,201) étant configurée de sorte que la rotation du mécanisme (10) entraîne un déplacement des cylindres (15,23,27,32) en rotation et longitudinalement à leur axe (O2).

## Description

La présente invention concerne un véhicule automobile comportant un dispositif de commande de boîte de vitesses à double embrayage. Plus particulièrement, l'invention a pour objet un dispositif de sélection de rapports de vitesse pour une boîte de vitesses à commande manuelle.

Dans l'état de la technique, un véhicule automobile est équipé d'une boîte de vitesses. Cette boîte de vitesses est un élément mécanique proposant plusieurs rapports de transmission d'un couple d'un arbre moteur à un arbre de sortie couplé aux roues motrices du véhicule.

La boîte de vitesses permet d'adapter le couple moteur disponible, au couple nécessaire au déplacement du véhicule.

Une boîte de vitesses à double embrayage est une boîte de vitesses robotisée améliorée. Ce type de boîte de vitesses permet de palier certains inconvénients dus à des à-coups et à la rupture d'accélération lors des passages de rapports de vitesse. Une boîte de vitesses à double embrayage dispose d'un rendement en consommation d'énergie relativement bon par rapport à une boîte de vitesses automatique très consommatrice en énergie. Cette différence de rendement est principalement due au fait que la boîte de vitesses à double embrayage n'est pas munie d'un convertisseur de couple gourmand en énergie.

La boîte de vitesses à double embrayage reprend l'architecture d'une boîte de vitesses manuelle, scindée en deux demi-boîtes. L'une d'elles sert pour les rapports pairs, l'autre est employée pour les rapports impairs. La boîte à double embrayage peut ainsi présélectionner la vitesse supérieure ou inférieure, pour élever ou abaisser le rapport de vitesse. Chaque demi-boîte dispose de son propre embrayage. Comme sur une boîte robotisée conventionnelle, l'embrayage et la sélection des rapports sont commandés par un robot, au moyen de vérins hydrauliques ou de moteurs électriques. Le passage de vitesses peut être commandé soit manuellement, soit automatiquement.

Lors d'un passage de vitesse, le robot se charge d'actionner l'embrayage et de passer les rapports à la place du conducteur. Le robot ouvre l'embrayage de la première demi-boîte et ferme simultanément celui de la seconde. Le robot est piloté par un calculateur électronique, capable d'adapter ses actions en fonction du mode de conduite du conducteur. Les rapports de vitesses peuvent aussi être commandés de manière manuelle mais au final, c'est le calculateur qui décide du rapport à engager.

Les dispositifs de commande de vitesses actuellement connus utilisent en général une commande par arbre secondaire, que ce soit une commande par barillet ou par came en actionnement électrique.

Des dispositifs de commande de ce genre sont définis ci-après.

Un document FR-A-1 497 939 divulgue un servomécanisme pour la commande d'un changement de vitesse. Ce servomécanisme comporte un moteur électrique relié à un commutateur suiveur. Ce commutateur possède un dispositif d'entraînement pouvant être un mécanisme de type à croix de Malte.

Un document FR-A-2 736 594 porte sur un dispositif de commande, notamment pour boîte de vitesses, où l'actionnement du processus de commutation ou de sélection peut être défini par l'agencement de mécanismes de transmission, pas à pas, à croix de Malte, de telle manière que les processus de changement de rapports se déroulent séquentiellement.

Un document EP-A-1 617 110 décrit une transmission à tambour de changement de vitesses via un mécanisme d'entraînement de tambour de changement de vitesse. Ce mécanisme est adapté pour effectuer ce changement par rotation du tambour, lui-même actionné via un mécanisme à intermittence pouvant être à croix de Malte.

Toutefois, ces dispositifs présentent des inconvénients. En effet, pour garantir l'engagement du rapport de vitesse sélectionné et assurer la sureté du fonctionnement du mécanisme de sélection, il est nécessaire d'ajouter un système de verrouillage au dispositif de commande. L'ajout d'un tel système de verrouillage pose des problèmes d'encombrement, de complexité de mise en oeuvre et de coût.

L'invention a pour but de résoudre ces inconvénients de l'état de la technique. Pour cela, l'invention propose un dispositif de commande de boîte de vitesses qui comporte un motoréducteur entraînant en rotation une roue crantée. Cette roue crantée comporte sur l'une de ses faces planes des moyens de rotation et des moyens de verrouillage. Ces faces planes sont configurées de sorte que les moyens de rotation entraînent en rotation un mécanisme d'entraînement et les moyens de verrouillage bloquent la rotation du mécanisme d'entraînement. La rotation de ce mécanisme entraîne un déplacement longitudinal de cylindres du dispositif de commande par rapport à leur axe. Ce déplacement longitudinal des cylindres entraîne un désengagement d'un rapport de vitesse pour un réengagement d'un rapport de vitesse suivant.

L'invention permet d'avoir une seule commande quel que soit le nombre d'arbres secondaires. Elle permet également d'utiliser un seul moteur pour commander quatre fourchettes. En outre, l'invention ne nécessite pas de système additionnel pour bloquer en position les fourchettes.

L'invention a donc pour objet un véhicule automobile comportant un dispositif de commande de boîte de vitesses, **caractérisé en ce que** le dispositif de commande de boîte de vitesse comporte :
- un servomoteur couplé à un mécanisme d'entraînement,
- un ensemble de cylindres montés les uns par rapport aux autres en liaison pivot glissant autour d'un même axe de rotation que le mécanisme d'entraînement,
- des moyens de réception pour accueillir les cylindres,
- une surface externe de chaque cylindre comporte des moyens de roulement sur une piste de roulement, la piste de roulement étant configurée de sorte que la rotation du mécanisme entraîne un déplacement des cylindres en rotation et longitudinalement à leur axe.

L'invention comporte l'une quelconque des caractéristiques suivantes :
- la piste de roulement comporte des dénivellations ;
- les moyens de réception des cylindres sont montés solidairement au mécanisme d'entraînement ;
- les moyens de réception des cylindres sont montés flottants et sont maintenus de manière fixes par l'assemblage des cylindres aux moyens de réception ;
- les moyens de réception sont des glissières circulaires et concentriques par rapport au mécanisme d'entraînement ;
- le mécanisme d'entraînement est un mécanisme à croix de Malte ;
- le servomoteur comporte un motoréducteur commandant avec précision les variations d'angle de rotation du mécanisme à croix de Malte ;
- les moyens de roulements comportent des roulements à aiguilles ;
- les cylindres comportent des encoches longitudinales pour permettre un déplacement des cylindres les uns par rapport aux autres, en rotation et longitudinalement à leur axe ;
- chaque cylindre porte une fourchette en prise avec un crabot, de sorte que le déplacement axial des cylindres entraîne un engagement ou un désengagement d'un crabot sur un pignon fou afin de sélectionner ou désélectionner un rapport de vitesse.

L'invention sera mieux comprise à la lecture de la description qui suit et à l'examen des figures qui l'accompagnent. Celles-ci ne sont présentées qu'à titre illustratif mais nullement limitatif de l'invention. Les figures montrent :
- Figures 1-4, 12 : des représentations schématiques du dispositif de commande de boîte de vitesses selon l'invention ;
- Figures 5-6 : des représentations schématiques d'une variante de réalisation du dispositif de commande selon l'invention ;
- Figure 7 : une représentation schématique du système de coulissement des cylindres selon l'invention ;
- Figure 8 : une représentation schématique d'une pente du système de coulissement selon l'invention ;
- Figure 9 : une représentation schématique du mécanisme d'entraînement selon l'invention ;
- Figure 10 : une représentation schématique du rapport de vitesse sélectionné en fonction de l'angle de rotation du mécanisme d'entraînement selon l'invention.
- Figure 11 : un tableau récapitulatif des rapports de vitesses obtenus en fonction de l'angle de rotation du mécanisme d'entraînement.

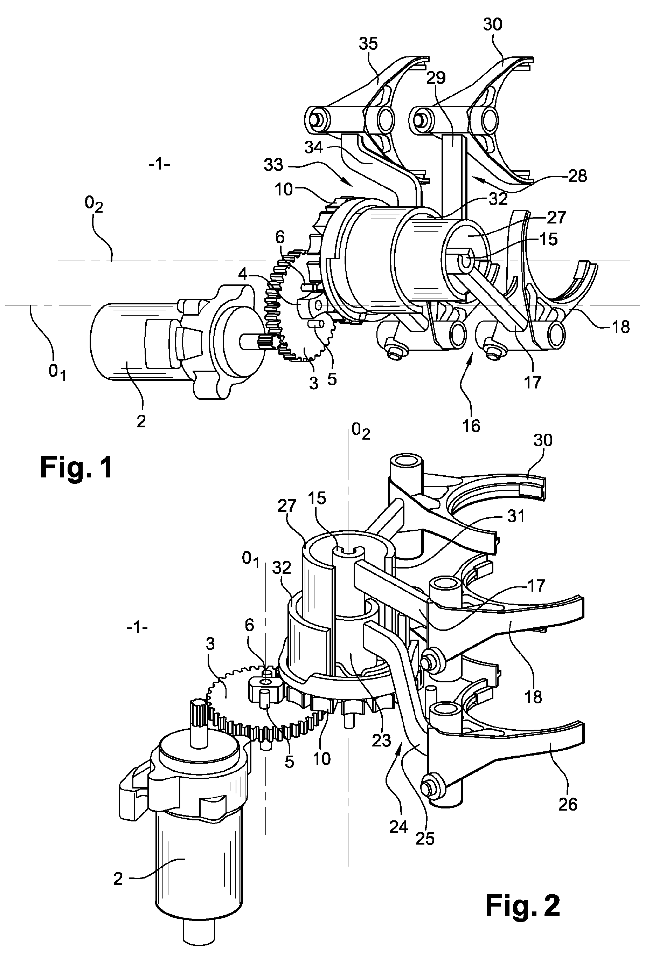

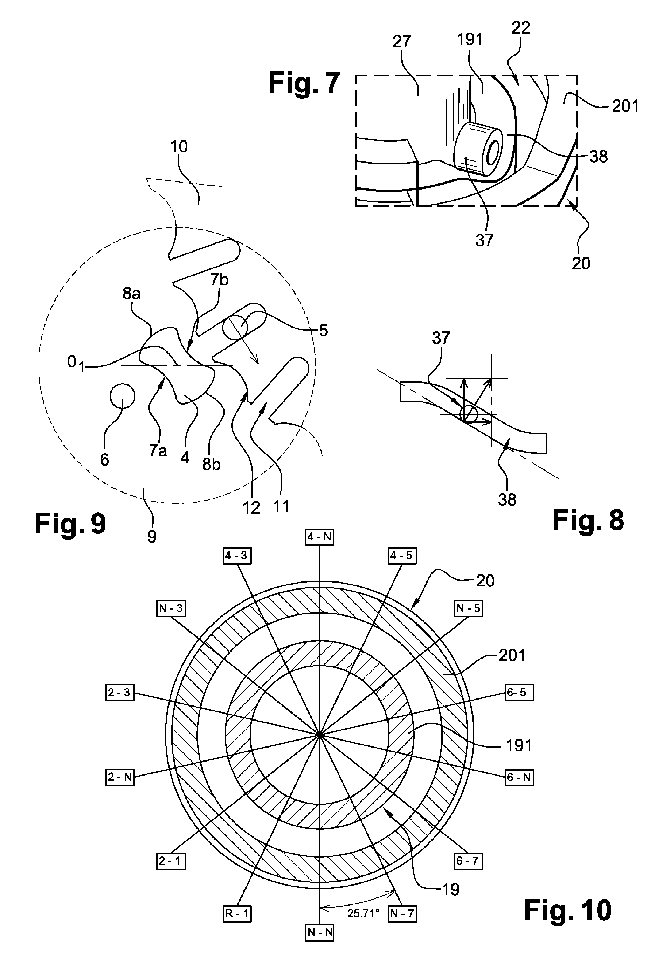

Les figures 1 et 2 montrent un dispositif 1 de commande pour une boîte de vitesses d'un véhicule automobile (non représenté). Ce dispositif 1 de commande, comporte un servomoteur 2. Ce servomoteur 2 est un motoréducteur capable d'atteindre des positions prédéterminées, et de les maintenir. Le motoréducteur 2 est couplé à une roue 3 pivotante autour d'un axe O1. Cette roue 3 comporte un cylindre 4 central et deux doigts 5, 6. Le cylindre 4 central, en forme de diabolo, comporte deux évidements 7a et 7b. Ces deux évidements 7a, 7b, montrés en détail à la figure 9, sont opposés l'un à l'autre.

Les deux doigts 5, 6 sont disposés excentriquement et de façon diamétralement opposés sur une surface 9 de la roue 3. Lors d'un pivotement de la roue 3 autour de son axe O1, un des deux doigts 5, 6, selon le sens de rotation de la roue 3, entraîne en rotation un mécanisme 10 d'entraînement autour d'un axe O2 parallèle à l'axe O1. Ce mécanisme 10 d'entraînement représente un mécanisme pas à pas à croix de Malte, dans lequel il est prévu plusieurs griffes ou ouvertures 11 (figure 9).

Une croix de Malte est une croix éventuellement à plus de quatre branches dans laquelle les bases des branches proche du centre de la croix sont plus fines que les épanouissements des branches, loin du centre de la croix. Un doigt 5 en positionnement, s'accroche dans l'une des griffes 11 et fait tourner la croix de Malte, avant que le doigt 5 ne s'écarte ensuite de la griffe 11 par pivotement vers l'extérieur. Le doigt 5 se dégage ainsi de la griffe 11. La roue 3 continue à pivoter autour de l'axe O1, tandis que la croix de Malte 10 est maintenue immobile. A cet effet, le cylindre 4 central, par ailleurs évidé, est muni entre les évidements de protubérances circonférentielles 8a, 8b complémentaires d'une surface 12 arrondie de la croix de Malte 10. Ces protubérances et surfaces 12 arrondies servent à stabiliser et verrouiller la position du mécanisme 10 d'entraînement lorsque le doigt 5, n'est pas accroché par la griffe 11.

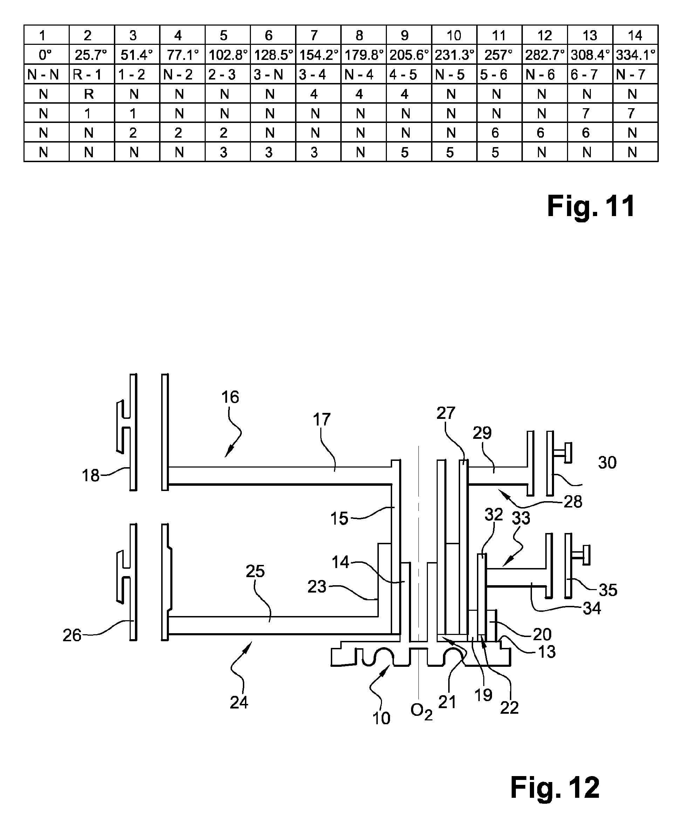

La croix de Malte 10 globalement plane comporte sur une de ses faces 13 un cylindre 14 (figure 12) monté de manière solidaire et concentrique. Elle porte aussi un ensemble de cylindres mobiles concentriques. Dans l'exemple décrit, il y a quatre cylindres mobiles 15, 23, 27 et 32. Ces cylindres mobiles peuvent se déplacer longitudinalement à l'axe O2 les uns par rapports aux autres.

Le cylindre mobile 15, de diamètre supérieur à celui du cylindre 14, est monté par une liaison pivot glissant sur le cylindre 14. Ce cylindre 15 porte perpendiculairement un bras 16. Le bras 16 comporte une partie 17 proximale solidaire du cylindre 15 et une partie 18 distale. La partie distale se présente sous la forme d'une fourchette.

La face 13 de la croix de Malte 10 comporte des moyens de réception de plusieurs cylindres. Ces moyens de réception sont formés par deux rainures circulaires 19, 20 circulaires et concentriques par rapport à l'axe de rotation O2. Ces deux rainures 19, 20 forment avec le cylindre 14 deux glissières 21, 22, creuses par rapport à un plan supérieur de la croix de Malte 10. Chacune des rainures 19, 20 comporte un diamètre intérieur et un diamètre extérieur, de sorte que la distance entre le diamètre intérieur et le diamètre extérieur forme un espace de roulement. Dans le reste de la description, l'espace de roulement de chaque rainure 19, 20 de la croix de Malte 10 est respectivement nommée piste de roulement interne 191 et piste de roulement externe 201, bordant par l'extérieur ces glissières 21 et 22 (figure 12).

Un cylindre circulaire 23 de diamètre sensiblement supérieur au cylindre 15, est monté en liaison pivot glissant sur le cylindre 15 dans la glissière 21. Ce cylindre 23 porte radialement, perpendiculairement à son axe, un bras 24. Le bras 24 comporte une partie proximale 25 solidaire du cylindre 23 et une partie distale 26, se présentant sous la forme d'une fourchette.

Un cylindre circulaire 27 de diamètre sensiblement supérieur au cylindre 23 et sensiblement inférieur au diamètre inférieur de la piste interne 191, est monté en liaison pivot glissant sur le cylindre 23. Ce cylindre 27 porte perpendiculairement un bras 28. Le bras 28 comporte une partie proximale 29 solidaire du cylindre 27 et une partie distale 30, se présentant sous la forme d'une fourchette.

Le cylindre circulaire 27 comporte en outre une encoche 31 longitudinale permettant respectivement un déplacement du bras 16 et du bras 24 par rapport au bras 28 longitudinalement à leur axe O2.

Un cylindre 32 de diamètre sensiblement supérieur au diamètre extérieur de la piste interne 191 et sensiblement inférieur au diamètre intérieur de la piste externe 201, est monté en liaison pivot glissant sur le cylindre 27. Ce cylindre 32 porte perpendiculairement un bras 33. Le bras 33 comporte une partie proximale 34 solidaire du cylindre 32 et une partie distale 35, se présentant sous la forme d'une fourchette.

Le cylindre circulaire 32 comporte en outre une encoche 36 longitudinale, permettant respectivement un déplacement axial du bras 16 et du bras 24 par rapport au bras 33 longitudinalement à leur axe O2.

Les cylindres 27 et 32 comportent chacun sur leur face externe un ensemble de roulements. Comme illustré à la figure 7, le cylindre 27 comporte un roulement 37 de préférence un roulement à aiguille dont l'axe de rotation s'étend radialement par rapport au cylindre 27. Ce roulement 37 est monté sur le cylindre 27 de manière à pouvoir se déplacer sur la piste 191. De même, un roulement (non représenté) est monté sur le cylindre 32 de manière à pouvoir se déplacer sur la piste 201.

Chacune des pistes 191, 201, comporte différentes dénivellations se présentant sous la forme d'une ou de plusieurs pentes 38. Ces dénivellations permettent un déplacement, longitudinalement à leur axe de rotation, des cylindres 27 et 32, lors de la rotation de la croix de Malte 10.

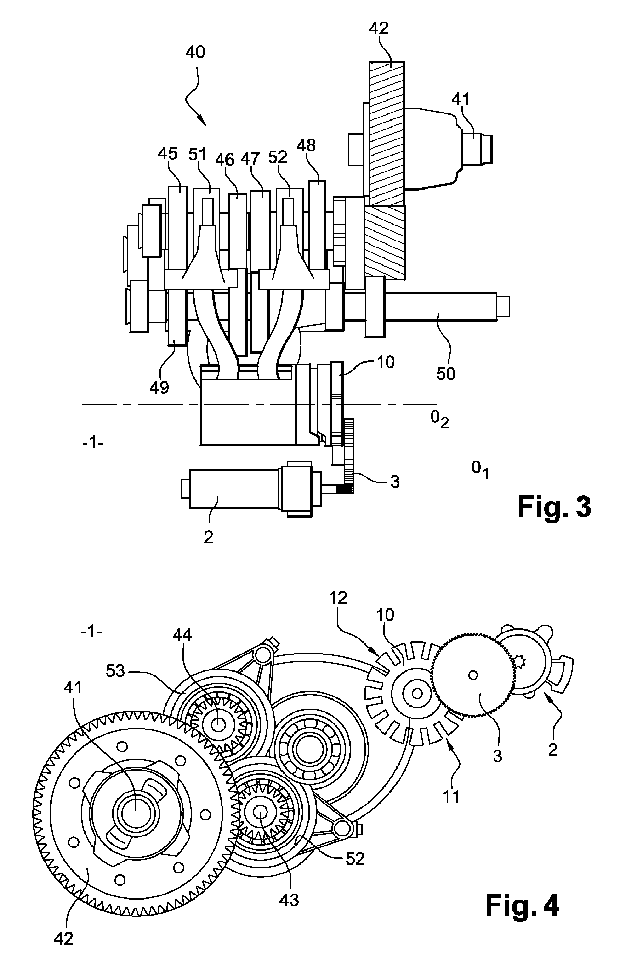

Les figures 3 et 4 montrent un exemple de boîte de vitesses 40 avec le dispositif 1 de commande selon l'invention. Cette boîte de vitesse 40 est une boîte manuelle qui comporte de manière classique un arbre d'entrée 41, encore appelé arbre primaire. Cet arbre primaire 41 est lié à l'arbre moteur via un dispositif d'embrayage (non représenté). Cet arbre primaire 41 porte un pignon fixe 42.

La boîte de vitesses 40 comporte en outre, dans un mode de réalisation préféré, deux arbres secondaires 43, 44, portant des pignons fous 45, 46, 47, 48, montés en liaison pivot, aptes à engrener respectivement avec un des pignons fixes 49 d'un arbre 50 de sortie. Il y a autant de pignons fixes 49 sur l'arbre 50 de sortie qu'il y a de rapports de vitesses disponibles. Sur chacun des arbres secondaires 43, 44, un crabot 51, 52 et un synchroniseur (non représenté) sont montés en liaison glissière entre deux pignons fous 45, 46, 47, 48. L'arbre 50 de sortie est quant à lui couplé aux roues motrices (non représenté) du véhicule automobile.

Lors d'un changement de rapport de vitesse, le motoréducteur 2 commande la rotation de la croix de Malte 10 d'un angle prédéterminé. Cette rotation de la croix de Malte 10, permet de déplacer axialement les cylindres au moyen des pistes 21, 22. Comme un cylindre 15, 23, 27, 32 porte une fourchette 18, 26, 30, 35, le déplacement axial d'un cylindre 15, 23, 27, 32 permet de faire coulisser un crabot 51, 52, 53, plus un crabot (non représenté), via la fourchette 18, 26, 30, 35, qui lui est associée. Par exemple, pour passer de la troisième à la quatrième, le crabot se désengage du pignon fou du troisième rapport de vitesse pour s'engager sur le pignon fou du quatrième rapport de vitesse.

La figure 10 est une représentation schématique du rapport de vitesse sélectionné en fonction de l'angle de rotation de la croix de Malte 10. Le tableau représenté à la figure 11 récapitule le rapport de vitesse obtenu en fonction de l'angle de rotation de la croix de Malte 10. Avec l'exemple précédent, le changement de rapport de vitesse se concrétise au niveau du dispositif 1 de commande, par une rotation de la croix de Malte 10 d'un angle de départ équivalent au troisième rapport de vitesse, autrement dit 128,5° jusqu'à un angle d'arrivée équivalent au quatrième rapport de vitesse, autrement dit 179,8°. Un angle de 154,2° correspond à une position intermédiaire du crabot lors du passage du troisième au quatrième rapport de vitesse.

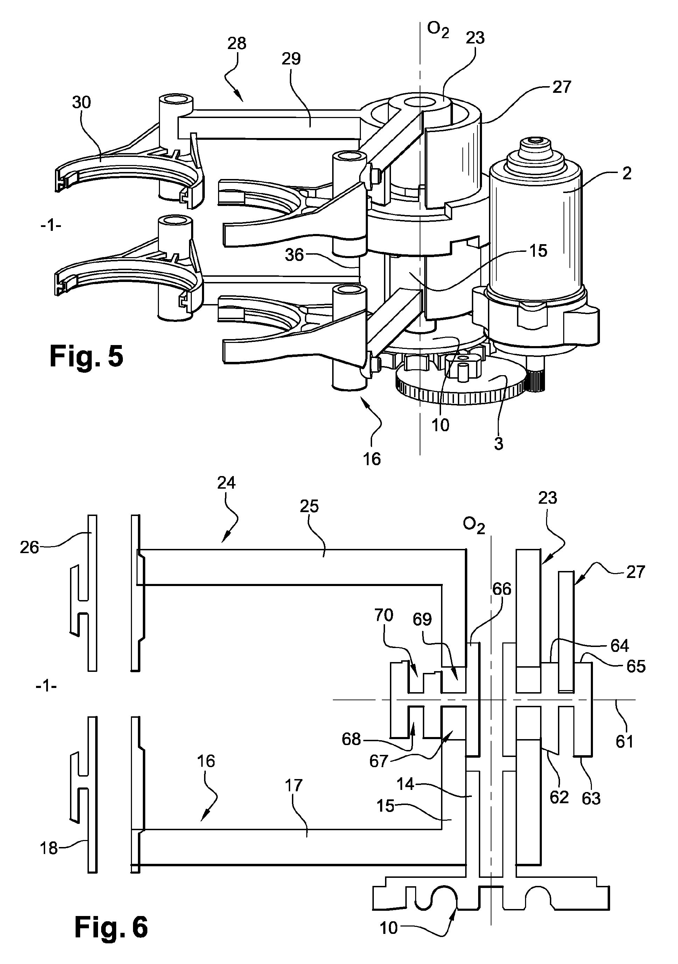

Les figures 5 et 6 montrent une variante de réalisation du dispositif 1.

Dans cette variante, un anneau 60 intermédiaire tournant autour de l'axe O2, comporte des reliefs pour accueillir les cylindres 15, 23, 27 et 32. Cet anneau 60 de forme globalement planes est symétrique par rapport à un plan 61 central. L'anneau 60 possède de son centre vers sa périphérie des couples symétriques de rainures circulaires creuses, formant glissières, 62, 63, 64 et 65. Ces rainures circulaires sont séparées d'un moyeu 66 et de la périphérie par des couples de protubérance circulaire respectivement 67 à 70.

L'anneau 60 est maintenu dans le dispositif 1 en flottement longitudinal selon l'axe O2. Il est par contre maintenu radialement par pivotement du cylindre 15 dans la rainure 62. Il accueil le cylindre 23 dans la rainure 64. Il reçoit les cylindres 32 et 27, respectivement dans les rainures 63 et 65.

Dans l'invention, il est prévu un couvercle ou chapeau en vis-à-vis l'un de l'autre, non représenté. Il permet par appui sur un des cylindres 23 et/ou 27, de donner une cohésion à l'ensemble.

## Revendications

**1.** Véhicule automobile comportant un dispositif de commande (1) de boîte de vitesses (40), **caractérisé en ce que** le dispositif de commande (1) de boîte de vitesse (40) comporte :
- un servomoteur (2) couplé à un mécanisme d'entraînement (10),
- un ensemble de cylindres (15, 23, 27, 32) montés les uns par rapport aux autres en liaison pivot glissant autour d'un même axe (O2) de rotation que le mécanisme d'entraînement (10),
- des moyens de réception pour accueillir les cylindres (15, 23, 27, 32),
- une surface externe de chaque cylindre (15, 23, 27, 32) comporte des moyens de roulement (37) aptes à se déplacer sur une piste de roulement (191, 201) configurée de sorte que la rotation du mécanisme (10) entraîne un déplacement des cylindres (15, 23, 27, 32) en rotation et longitudinalement à leur axe (O2).

**2.** Véhicule selon la revendication 1 **caractérisé en ce que** la piste de roulement (191, 201) comporte des dénivellations (38).

**3.** Véhicule selon l'une des revendications 1 à 2, **caractérisé en ce que** les moyens de réception des cylindres (15, 23, 27, 32) sont montés solidairement au mécanisme d'entraînement (10).

**4.** Véhicule selon l'une des revendications 1 à 2, **caractérisé en ce que** les moyens de réception des cylindres (15, 23, 27, 32) sont montés flottants et sont maintenus de manière fixes par l'assemblage des cylindres (15, 23, 27, 32) aux moyens de réception.

**5.** Véhicule selon l'une des revendications 1 à 4, **caractérisé en ce que** les moyens de réception sont des glissières circulaires et concentrique par rapport au mécanisme d'entraînement (10).

**6.** Véhicule selon l'une des revendications 1 à 5, **caractérisé en ce que** le mécanisme d'entraînement (10) est un mécanisme à croix de Malte.

**7.** Véhicule selon l'une des revendications 1 à 6, **caractérisé en ce que** le servomoteur (2) comporte un motoréducteur commandant avec précision les variations d'angle de rotation du mécanisme (10) à croix de Malte.

**8.** Véhicule selon l'une des revendications 1 à 7, **caractérisé en ce que** les moyens de roulements (37) comportent des roulements à aiguilles.

**9.** Véhicule selon l'une des revendications 1 à 8, **caractérisé en ce que** les cylindres (27, 32) comportent des encoches (31) longitudinales pour permettre un déplacement des cylindres (27, 32) les uns par rapport aux autres, longitudinalement à leur axe (02).

**10.** Véhicule selon l'une des revendications 1 à 9, **caractérisé en ce que** chaque cylindre (15, 23, 27, 32) porte une fourchette (18, 26, 30, 35) en prise avec un crabot, de sorte que le déplacement axial des cylindres (15, 23, 27, 32) entraîne un engagement ou un désengagement d'un crabot sur un pignon fou (45, 46, 47, 48) afin de sélectionner ou désélectionner un rapport de vitesse.
